# EUROPEAN PATENT APPLICATION

(11) **EP 1 571 410 A1**
(43) Date of publication of application: **07.09.2005**
(21) Application number: 04103796.1
(22) Date of filing: 06.08.2004
(51) Int. Cl.: F41B 7/04

(54) **Universal head for rubber-band underwater guns**

(30) Priority: 05.03.2004 IT GE20040018
(71) Applicant: HTM SPORT S.p.A., 16035 Rapallo (Genova) (IT)
(72) Inventor: BARONE, Aristide, 16035, RAPALLO (IT)
(74) Representative: Porsia, Attilio

(57) **Abstract**

Universal head for mounting rubber bands in rubber-band underwater guns, characterized in that it comprises two parts or jaws (2,3) which are hinged together at one end so that they may be opened or closed in the manner of jaws and which define between them when they are closed at least one annular opening (9,10), there being provided releasable means (5,8) for locking said hinged parts (2,3) in the closed position. The said head comprises also an insert having in plan-view a profile substantially in the form of a U with the two arms (12) of the U terminating in threaded tubular bushes (13) which are joined together by a cylindrical body (14) having a diameter substantially corresponding to said circular openings (9,10) of the hinged parts (2,3), so that the cylindrical joining body (14) of said insert may be inserted inside one of said circular openings (9, 10), thus locking the joining body (14) of the two arms (12) on which said tubular bushes (13) are mounted between said jaws (2,3).

## Description

The present invention relates to rubber-band underwater guns, of the so-called "arbalete" type, and more particularly to a universal head for fixing the rubber bands in these guns.

As is known, said guns are essentially composed of a tubular shaft having at one end a handle grip with the mechanism for retaining and releasing the arrow and having at the other end a head for hooking the rubber bands used to propel the arrow.

As is well known, there exist two types of rubber bands for these guns, namely loop rubber bands, which are inserted inside a seat with a profile substantially in the form of a closed ring or in the form of a groove open at the front, formed in the head of the gun, and open rubber bands which are formed by two sections of rubber each terminating in a threaded head, which is threaded into special threaded bushes projecting from the opposite sides of the gun head.

Utility Model Patent No. 248,406 in the name of the present Applicants describes a rubber-band gun for underwater fishing having a head provided laterally with two bushes for fixing the ends of an open rubber band and provided at the front with a recess able to house internally in a removable manner an insert provided with means for connecting an annular rubber band.

The present invention relates to a universal head able to be converted in a rapid and simple manner into a head for loop rubber bands or open rubber bands or also into a head able to receive simultaneously both these types of rubber band.

In accordance with a characteristic feature of the present invention, this head comprises two parts which are hinged together at one end so that they may be opened or closed in the manner of jaws and which define between them when they are closed at least one annular opening, there being provided releasable means for locking said hinged parts in the closed position and there being provided an insert having in plan-view a profile substantially in the form of a U with the two arms of the U terminating in threaded tubular bushes which are joined together by a cylindrical body having a diameter substantially corresponding to the circular openings of the hinged parts, so that said insert may be inserted inside one of said circular openings, the cylindrical joining body of the two arms on which said tubular bushes are mounted being locked between said jaws.

Further objects, advantages and characteristic features of the present invention will emerge more clearly from the following detailed description of a preferred embodiment thereof, illustrated by way of a non-limiting example of the accompanying drawing in which:
Figure 1 shows the head according to the invention, with the hinged jaws closed, said head being designed to receive one or two loop rubber bands;
Figure 2 shows the head according to Figure 1 with the two jaws open, ready to receive the loop rubber bands or an insert for fixing two rubber bands of the open type;
Figure 2A shows the insert for receiving two rubber bands of the open type; and
Figure 3 shows the head according to Figures 1 and 2 above with, fitted, the insert for receiving two open-type rubber bands according to Figure 2A.

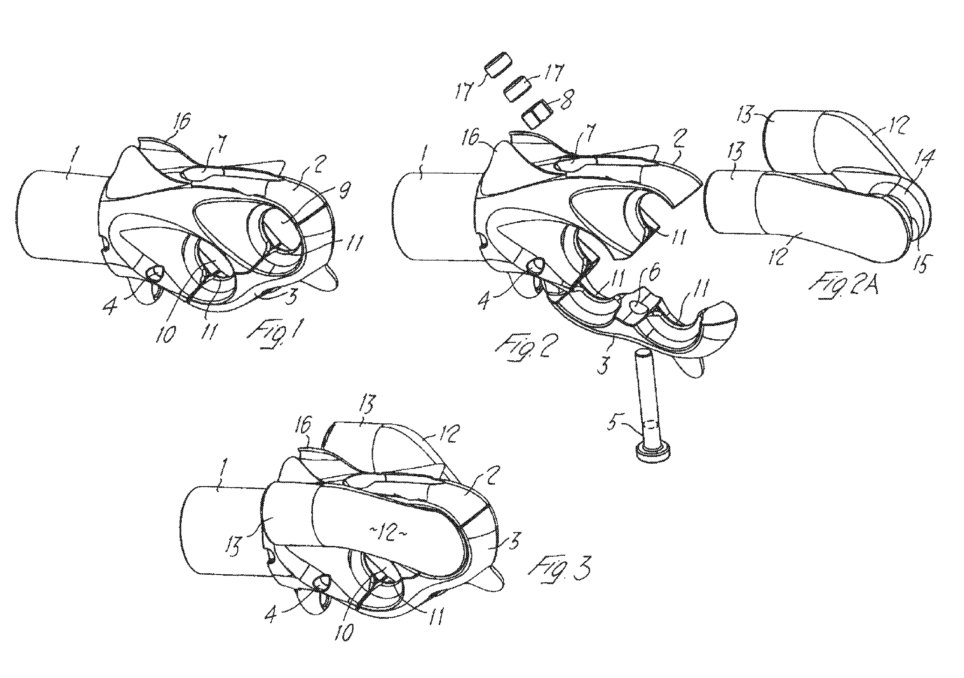

With reference to the drawing and with particular reference to Figures 1 and 2, the head shown comprises a cylindrical shank 1 which is intended to be engaged inside the front end of the tubular shaft (not shown) of the gun. The shank 1 in turn has, mounted on it, a component consisting of two jaws 2 and 3 which are hinged together by means of a hinging pin 4 and held together by means of a screw 5 (Figure 2) which passes with its shank through a hole 6 in the movable jaw 3 and through a corresponding cavity 7 in the fixed jaw 2, where it is locked in the closed position of the two jaws (position shown in Figure 1) by means of a nut 8. The two jaws 2 and 3 define between them, in the closed position, two annular holes 9 and 10. Advantageously said holes are delimited by an annular ridge 11 having, viewed in cross-section, a triangular profile, for the purposes which will be described below. The diameter of the holes 9 and 10 corresponds substantially to the diameter of the rubber bands to be seated in said annular seats.

With reference to Figure 2A, the insert which can be combined with the head described hitherto and which allows mounting of open-type rubber bands onto said head will now be described.

This insert has in plan view a profile substantially in the form of a U with the two arms 12 of the U terminating in threaded tubular bushes 13. The two arms 12 are joined together by a central cylindrical body 14 having a diameter substantially corresponding to the diameter of the openings 9 in the jaws 2 and 3 and provided in the middle part with an annular groove 15 having a shape and diameter substantially complementing the shape and diameter of the ridges 11 of the jaws 2 and 3, so that said insert may be inserted inside one of said circular openings 9, then locking firmly the joining body of the two tubular arms between said jaws 2 and 3 by means of the screw 5 and the nut 8, as shown in Figure 3.

A further characteristic feature of the present invention consists in the particular form of the part for guiding the front of the arrow shaft (not shown). Normally, this part is formed by a bridge-piece which is situated at the end of the said head. However, the presence of this bridge-piece interrupts the line of sight of the underwater diver and therefore affects the precision during aiming at the target. According to the present invention, this guiding part 16 is realized in the form of two wings converging, but separate at the top, so as not to interfere with the line of sight of the underwater diver.

A further problem which affects rubber-band guns consists in the fact that, either owing to the use of arrows of different weight and/or length or owing to the use of one or more imitation rubber bands, or for other reasons, it often happens that the balance of the gun in the water varies. According to the invention, this problem is overcome by mounting one or more small annular weights 17 on the pin of the screw 5 projecting inside the cavity 7 so as to adjust the balance of the said gun.

The operating principle of the head described is obvious. The annular ridge 11 inside the holes 9, 10 of the head has advantageously a diameter which is slightly smaller than the diameter of the loop rubber bands to be mounted on the gun, so that these rubber bands are gripped lightly during fixing thereof on the said head, so as to prevent them moving from one side to other with respect to the said head. Moreover, owing to the presence of the groove 15 in the cylindrical body 14 which co-operates with the ridge 11 during locking of the insert for mounting rubber bands of the open type, firm fixing of this insert on the gun head is achieved.

Obviously, the present invention is not limited to the embodiments shown and described, but comprises all those variations and modifications which fall within the wider scope of the inventive idea, substantially as claimed below.

## Claims

1. Universal head for mounting rubber bands in rubber-band underwater guns, **characterized in that** it comprises two parts or jaws (2,3) which are hinged together at one end so that they may be opened or closed in the manner of jaws and which define between them when they are closed at least one annular opening (9,10), there being provided releasable means (5,8) for locking said hinged parts (2,3) in the closed position.

2. Head according to Claim 1, in which said annular openings (9,10) have in their middle part a ridge (11) projecting radially inwards.

3. Head according to Claim 2, in which said ridge (11) has a profile, when viewed in cross-section, which is substantially triangular.

4. Head according to any one of the preceding claims, **characterized in that** it also comprises an insert having in plan-view a profile substantially in the form of a U with the two arms (12) of the U terminating in threaded tubular bushes (13) which are joined together by a cylindrical body (14) having a diameter substantially corresponding to said circular openings (9,10) of the hinged parts (2,3), so that the cylindrical joining body (14) of said insert may be inserted inside one of said circular openings (9, 10), the joining body (14) of the two arms (12) on which said tubular bushes (13) are mounted being locked between said jaws (2,3).

5. Head according to Claim 4, in which said joining body (14) has a middle circumferential groove (15).

6. Head according to Claim 5, in which said circumferential groove (15) has a cross-sectional profile which is substantially triangular and complements the profile of the ridges (11) inside the openings (9,10) of the said head.

7. Head according to Claim 1, in which said releasable means for locking the said hinged jaws comprise a threaded pin (5) which is made to pass through alignable holes (6,7) of the said jaws (2,3) and is locked by means of a threaded nut (8).

8. Head according to Claim 7, in which the end of said pin (5) emerges inside a hole (7) for receiving said nut (8).

9. Head according to Claim 7 and/or 8, in which the end of said pin (5) projecting inside said hole (7) is able receive one or more small annular weights (17).

10. Head according to any one of the preceding claims, in which said head has, mounted on top of it, an arrow guiding part (16) consisting of two spaced wings which converge without completely closing the space between their free ends.
